# FASCICULE DE BREVET EUROPEEN

(11) **EP 2 542 844 B1**
(45) Date de publication et mention de la délivrance du brevet: **17.04.2019**
(21) Numéro de dépôt: 11708550.6
(22) Date de dépôt: 11.02.2011
(51) Int. Cl.: F25J 3/00, F25J 3/02, F28D 1/02

(54) **APPAREIL ET PROCÉDÉ DE SÉPARATION D'UN MÉLANGE CONTENANT DU DIOXYDE DE CARBONE PAR DISTILLATION**
VORRICHTUNG UND VERFAHREN ZUR DESTILLATIVEN TRENNUNG EINER KOHLENDIOXID ENTHALTENDEN MISCHUNG
APPARATUS AND METHOD FOR SEPARATION OF A MIXTURE CONTAINING CARBON DIOXIDE BY DISTILLATION

(30) Priorité: 01.03.2010 FR 1051429
(43) Date de publication de la demande: 09.01.2013
(73) Titulaire: L'AIR LIQUIDE, Société Anonyme pour l'Etude et l'Exploitation des Procédés Georges Claude, 75007 Paris (FR)
(72) Inventeur: BERTHOME, Bruno, F-75014 Paris (FR); PERRU, Laurent, F-78780 Maurecourt (FR); RIVOAL, Fabrice, F-94400 Vitry Sur Seine (FR)
(74) Mandataire: Mercey, Fiona Susan
(86) Numéro de dépôt international: PCT/FR2011/050288
(87) Numéro de publication internationale: WO 2011/107685

(56) Documents cités:
- US-A- 4 460 395
- US-A- 6 070 431
- US-A1- 2002 059 807
- US-A1- 2003 150 602
- US-A1- 2006 086 140
- LINDE ENGINEERING: "Looking inside... "Spiral-Wound" versus "Plate-Fin" Heat Exchangers", ACHEMA, 2006, 15 mai 2006 (2006-05-15), pages 1-16, XP002606618, Frankfurt a.M.

## Description

La présente invention est relative à un appareil et à un procédé de séparation d'un mélange de dioxyde de carbone par distillation.

Il est connu de séparer des mélanges comprenant du dioxyde de carbone et au moins un autre gaz par distillation à des températures subambiantes. Le reflux en tête de la colonne est produit par condensation d'au moins une partie du gaz de tête de la colonne. Actuellement la liquéfaction du gaz de tête d'une colonne de séparation d'un mélange contenant du dioxyde de carbone est réalisée a l'aide d'un condenseur de type tube calandre en acier inoxydable, tel qu'illustré dans US-A-3317278. Cet échangeur qui possède les particularités intéressantes de résistances aux fortes pressions, de libre dilatation des tubes et du corps, et acceptant tous types de puissances possède plusieurs inconvénients tels que l'encombrement et le prix de revient.

L'utilisation de la technologie d'échangeur de type tube calandre pour liquéfier le gaz de tête de la colonne impose l'utilisation d'un support lourd et coûteux ayant une empreinte au sol de l'ordre de 30 m². Avec une longueur de condenseur de plus de 10 m, l'optimisation de l'assemblage des équipements et l'intégration sur site sont compliquées à mettre en oeuvre, nécessitent la location de grue et moyen de levage particuliers en cas de maintenance.

Ensuite, le procédé de distillation implique souvent un circuit de refroidissement à l'ammoniac. Plus l'échangeur est grand, plus le volume de réfrigérant est augmenté, ce qui va à l'encontre de la stratégie actuelle de réduction des volumes d'ammoniac sur site industriel.

Enfin, l'échange thermique entre le CO₂ et l'ammoniac est peu efficace avec une technologie tube calandre.

US-A-2002/059807 décrit un appareil selon le préambule de la revendication 1.

La présente invention s'applique de préférence aux mélanges contenant du dioxyde de carbone où le dioxyde de carbone constitue au moins 90% du total. Au moins un autre constituant du mélange peut être choisi dans le groupe azote, méthane, oxygène, argon. Tous les pourcentages sont des pourcentages molaires.

Le mélange à séparer peut être le gaz résiduaire d'une oxycombustion, un procédé sidérurgique, une production de bioéthanol, un traitement de gaz de synthèse, un gaz issu d'une fermentation ou d'une cimenterie.

Selon un objet de l'invention, il est prévu un appareil selon la revenidcation 1. Selon une caractéristique facultative :
- la plus grande dimension de l'échangeur constituant le condenseur est selon un axe substantiellement vertical, en usage.

Selon un autre objet de l'invention, il est prévu un procédé selon la revendication 4.

Eventuellement on chauffe la cuve de la colonne au moyen du mélange à séparer avant d'envoyer le mélange à séparer à la colonne ou au condenseur.

De l'ammoniac liquide ou diphasique peut se réchauffer dans le condenseur.

Une partie du liquide de cuve de la colonne peut être soutirée de lacolonne comme produit.

Le mélange peut comprendre au moins 90% de dioxyde de carbone.

L'invention sera décrite en plus de détails en se référant aux figures, dont les Figures 1 et 2 représentent des appareils de séparation illustrés à titre comparatif et la Figure 3 représente un appareil de séparation selon l'invention.

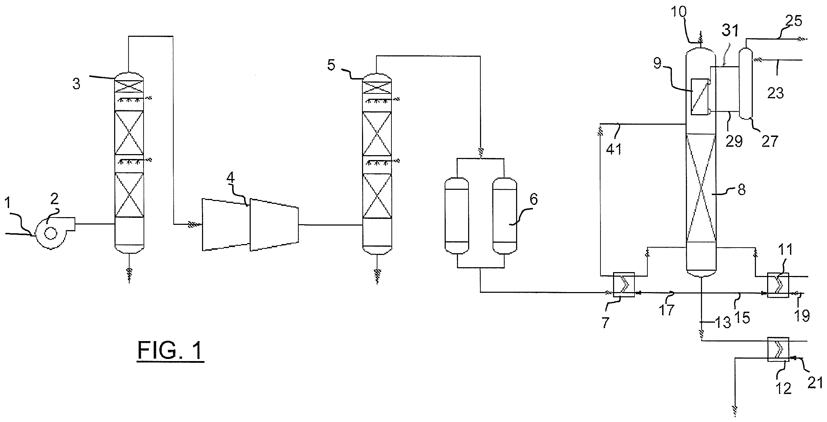

La Figure 1 représente un appareil de séparation d'un mélange ayant comme composants principaux du dioxyde de carbone, des alcools, l'hydrogène, l'oxygène, l'argon, l'azote, et le monoxyde de carbone et d'autres impuretés. Entre 2000 et 5000 Nm³/h du mélange issu de sources industrielles de type production de bioéthanol ou de gaz de synthèse, entre dans une conduite 1 et est comprimé dans un compresseur 2. Réchauffé aux alentours de 80°C (non-illustré), le mélange est ensuite refroidi et lavé par contact direct dans une première tour de lavage 3, avec de l'eau contrôlée de qualité alimentaire refroidie par contact indirect avec de l'ammoniac. Pendant le procédé de lavage, une partie des impuretés solubles telles que les alcools et les éléments oxygénés volatils sont absorbées dans l'eau et purgées. Ensuite, le mélange provenant de la première tour de lavage est comprimé aux alentours de 20 bara par le compresseur 4 et est introduit dans la deuxième tour de lavage 5 où les impuretés restantes et les traces de molécules oxygénées sont en grande partie absorbées.

Le mélange lavé dans la deuxième tour de lavage subit une étape de purification en traversant une unité de purification 6 constitué par plusieurs lits de charbons actifs et alumine ayant pour rôle de arrêter l'ensemble des hydrocarbures aliphatiques, oxygénés et aromatiques, les composés souffrés et azotés, les traces d'huiles ainsi que les particules polaires telles que l'eau. En quittant l'unité de purification 6, le mélange 41 est sec, conforme à la norme qualité ISBT (International Society of Beverage Technologists), hormis les incondensables tels que l'hydrogène, l'oxygène, l'argon, l'azote, et le monoxyde de carbone qui seront mis à l'air lors du procédé de distillation.

Ensuite, le mélange 41 provenant de l'unité de purification 6 entre dans la boite froide (non-illustrée), est refroidi dans un premier échangeur 7 et est introduit en tête d'une colonne de distillation 8. La colonne de distillation est une colonne contenant des garnissages structurés ou des plaques. Le mélange 41, contenant au moins 90% de dioxyde de carbone, rentre dans la colonne à l'état gazeux puis passe en grande partie au condenseur 9. Le condenseur 9 est constitué par un échangeur à plaques et à ailettes en aluminium brasé, orienté avec sa dimension la plus grande dans le sens vertical et placé au-dessus de la colonne 8. Alors que le dioxyde de carbone dans le mélange se condense dans le condenseur 9, les gaz plus légers (oxygène, azote, argon, monoxyde de carbone) restent incondensables et sont en grande partie sortis du condenseur 9 par la conduite de mise à l'air 10. Les traces d'incondensables présentes dans le CO₂ liquide condensé dans le condenseur 9 sont éliminées par distillation afin d'obtenir la pureté requise en cuve de colonne.

La condensation du mélange dans le condenseur 9 est réalisée par vaporisation de l'ammoniac, à 1.1 bara et -31.8 °C. L'ammoniac liquide 23 est envoyé à un réservoir 27 qui alimente le condenseur par le bas au moyen d'une conduite 29. L'ammoniac se vaporise dans le condenseur par échange de chaleur avec le gaz de tête de la colonne et sort gazeux par la conduite 31 qui renvoie le gaz en tête du réservoir 27. Le gaz du réservoir est circulé à un circuit de refroidissement au moyen de la conduite 25.

En cuve de la colonne est produit un liquide riche en dioxyde de carbone. Une partie 13 de ce liquide sert de produit après sous-refroidissement dans l'échangeur 12 avec un débit d'ammoniac 21 puis détente jusqu'à 16 bara.

Une autre partie 15 du débit riche en dioxyde de carbone est chauffée dans un échangeur 11 contre de l'ammoniac liquide 19 et le gaz riche en dioxyde de carbone produit est renvoyé à la colonne.

Une autre partie 17 du débit riche en dioxyde de carbone est chauffée dans un échangeur 7 contre le mélange d'alimentation provenant de l'unité de purification 6 et le gaz riche en dioxyde de carbone produit est renvoyé à la tête de la colonne comme déjà décrit.

La pureté du dioxyde de carbone est régulée par les échangeurs 7 et 11 qui servent de rebouilleurs.

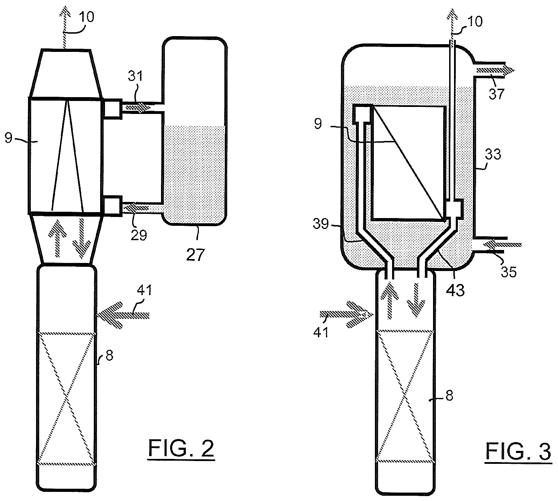

Les figures 2 et 3 illustrent deux variantes pour l'appareil de séparation dont seulement celle de la figure 3 est conforme à l'invention. Dans la figure 2, le condenseur 9 est du type à thermosiphon. Le condenseur 9 surmonte la colonne et le gaz monte vers le condenseur 9 au moyen d'une extension de la colonne permettant la montée de gaz et la descente de liquide. Le condenseur est relié au réservoir d'ammoniac 27 au moyen des conduites 29, 31 déjà décrites pour la Figure 1. Le condenseur 9 est un échangeur à plaques et à ailettes en aluminium brasé et ayant une surface d'échange par m³ d'échangeur supérieure à 400 m²/m³.

Le mélange 41 est envoyé soit en haut de la colonne 8 soit à l'entrée du condenseur 9.

Pour la figure 3, le condenseur 9 est placé dans un bain 33 de fluide frigorifique, dans ce cas de l'ammoniac. Le condenseur 9 est un échangeur à plaques et à ailettes en aluminium brasé et ayant une surface d'échange par m³ d'échangeur supérieure à 400 m²/m³.

Le mélange à séparer 41 est envoyé à l'entrée du condenseur 9 via une conduite 39.

Le gaz de tête est amené au condenseur au moyen de la conduite 39 reliant la tête du condenseur avec la tête de la colonne 8. Le liquide condensé dans le condenseur revient vers la colonne au moyen d'une conduite 43 alors qu'une autre conduite 10 assure la mise à l'air des incondensables. Une entrée 35 alimente le bain 33 en fluide frigorifique et une sortie évacue le gaz vaporisé dans le bain.

Dans les deux cas des Figures 2 et 3, le condenseur 9 est disposé au-dessus de la colonne 8. D'autres dispositions peuvent être envisagées mais ne sont pas conforme à la présente l'invention. Les Figures 2 et 3 ne montrent pas le rebouilleur de cuve pour simplifier le dessin.

Pour l'exemple des Figure 2 et 3, la colonne 8 fonctionne à une pression d'entre 18 bara et 30 bars, des pressions plus élevées étant possibles mais au prix d'un matériel plus coûteux. Le rebouilleur n'est pas montré dans ces figures dans un souci de simplification.

L'usage d'un échangeur à plaques et à ailettes en aluminium brasé permet de réduire le poids global de l'appareil, de réduire le volume d'ammoniac utilisé et de confiner son usage principalement à la bôite froide où est situé la colonne, de réduire la prise au sol de l'appareil et d'en baisser le prix.

## Revendications

1. Appareil de séparation d'un mélange contenant comme composants principaux du dioxyde de carbone et au moins un autre fluide choisi dans le groupe azote, oxygène, argon, hydrogène, méthane, monoxyde de carbone par distillation comprenant une colonne de distillation (8), un condenseur (9), un rebouilleur (7, 11), une conduite (39) pour envoyer le mélange à séparer au condenseur, des moyens pour envoyer un gaz de tête de la colonne au condenseur, des moyens pour mettre à l'air les gaz qui ne se condensent pas dans le condenseur (9) et des moyens pour envoyer un liquide condensé dans le condenseur en tête de la colonne, le condenseur étant constitué par un échangeur à plaques et à ailettes en aluminium brasé et le condenseur (9) est placé dans un bain de fluide réfrigérant qui est l'ammoniac, **caractérisé en ce que** l'échangeur a une surface d'échange par m³ d'échangeur supérieure à 400 m²/m³, **en ce que** le condenseur (9) est disposé au-dessus de la colonne (8), en usage et **en ce que** le gaz de tête est envoyé au condenseur par la conduite (39).

2. Appareil selon la revendication 1 dans lequel le condenseur (9) est relié à des moyens d'alimentation d'ammoniac liquide ou diphasique.

3. Appareil selon l'une des revendications précédentes dans lequel la plus grande dimension de l'échangeur constituant le condenseur (9) est selon un axe substantiellement vertical, en usage.

4. Procédé de séparation d'un mélange contenant comme composants principaux du dioxyde de carbone et au moins un autre fluide choisi dans le groupe azote, oxygène, argon, hydrogène, méthane, monoxyde de carbone par distillation dans un ensemble comprenant une colonne de distillation (8), un condenseur (9) et un rebouilleur (7, 11) dans lequel le mélange à séparer est envoyé au condenseur par une conduite (39), un gaz de tête de la colonne chauffe le condenseur, se liquéfie et est renvoyé à la colonne, on met à l'air les gaz qui ne se condensent pas dans le condenseur (9), le condenseur étant constitué par un échangeur à plaques et à ailettes en aluminium brasé dans un bain d'ammoniac et le condenseur étant refroidi en envoyant un débit d'ammoniac au condenseur **caractérisé en ce que** l'échangeur a une surface d'échange par m³ d'échangeur supérieure à 400 m²/m³, le condenseur (9) est disposé au-dessus de la colonne (8), on envoie le gaz de tête au condenseur par la conduite et aucune partie du liquide de cuve de la colonne (8) n'est envoyée au condenseur (9).

5. Procédé selon la revendication 4 dans lequel de l'ammoniac liquide ou diphasique se réchauffe dans le condenseur.

6. Procédé selon l'une des revendications 4 ou 5 dans lequel on chauffe la cuve de la colonne (8) au moyen du mélange à séparer avant d'envoyer le mélange à séparer au condenseur (9).

7. Procédé selon l'une des revendications 4 à 6 dans lequel le mélange comprend au moins 90% de dioxyde de carbone.

8. Procédé selon l'une des revendications 4 à 7 dans lequel une partie du liquide de cuve de la colonne est soutiré de la colonne comme produit.

## Patentansprüche

1. Einrichtung zum Trennen eines Gemisches, das als Hauptbestandteile Kohlendioxid und mindestens ein anderes Fluid enthält, ausgewählt aus der Gruppe Stickstoff, Sauerstoff, Argon, Wasserstoff, Methan, Kohlenmonoxid, durch Destillation, umfassend eine Destillationssäule (8), einen Kondensator (9), einen Verdampfer (7, 11), eine Leitung (39), um dem Kondensator das zu trennende Gemisch zuzuführen, Mittel, um dem Kondensator ein Kopfgas der Säule zuzuführen, Mittel, um die Gase, die in dem Kondensator (9) nicht kondensieren, zu entlüften, und Mittel, um eine kondensierte Flüssigkeit in den Kondensator am Kopf der Säule zuzuführen, wobei der Kondensator aus einem Plattenwärmetauscher und einem Wärmetauscher aus Rippen aus hartgelötetem Aluminium besteht und der Kondensator (9) in einem Bad aus einem Kältemittelfluid platziert ist, das Ammoniak ist, **dadurch gekennzeichnet, dass**
der Wärmetauscher eine Austauschfläche je m³ Wärmetauscher von mehr als 400 m²/m³ aufweist, dadurch, dass
der Kondensator (9) im Betrieb oberhalb der Säule (8) angeordnet ist,
und dadurch, dass das Kopfgas
dem Kondensator durch die Leitung (39) zugeführt wird.

2. Einrichtung nach Anspruch 1, wobei der Kondensator (9) mit Versorgungsmitteln für flüssiges oder zweiphasiges Ammoniak verbunden ist.

3. Einrichtung nach einem der vorstehenden Ansprüche, wobei die größte Abmessung des Wärmetauschers, der den Kondensator (9) bildet, im Betrieb entlang einer im Wesentlichen vertikalen Achse verläuft.

4. Verfahren zum Trennen eines Gemisches, das als Hauptbestandteile Kohlendioxid und mindestens ein anderes Fluid enthält, ausgewählt aus der Gruppe Stickstoff, Sauerstoff, Argon, Wasserstoff, Methan, Kohlenmonoxid, durch Destillation in einer Anordnung, umfassend eine Destillationssäule (8), einen Kondensator (9) und einen Verdampfer (7, 11), wobei dem Kondensator das zu trennende Gemisch durch eine Leitung (39) zugeführt wird, ein Kopfgas der Säule den Kondensator erwärmt, sich verflüssigt und der Säule erneut zugeführt wird, die Gase, die in dem Kondensator (9) nicht kondensieren, entlüftet werden, wobei der Kondensator aus einem Plattenwärmetauscher und einem Wärmetauscher aus Rippen aus hartgelötetem Aluminium in einem Ammoniakbad besteht und der Kondensator gekühlt wird, indem dem Kondensator ein Durchsatz an Ammoniak zugeführt wird, **dadurch gekennzeichnet, dass** der Wärmetauscher eine Austauschfläche je m³ Wärmetauscher von mehr als 400 m²/m³ aufweist,
der Kondensator (9) oberhalb der Säule (8) angeordnet ist,
das Kopfgas dem Kondensator durch die Leitung zugeführt wird, und dem Kondensator (9) kein Teil der Sumpfflüssigkeit der Säule (8) zugeführt wird.

5. Verfahren nach Anspruch 4, wobei flüssiges oder zweiphasiges Ammoniak in dem Kondensator erwärmt wird.

6. Verfahren nach einem der Ansprüche 4 oder 5, wobei der Sumpf der Säule (8) mittels des zu trennenden Gemisches erwärmt wird, bevor dem Kondensator (9) das zu trennende Gemisch zugeführt wird.

7. Verfahren nach einem der Ansprüche 4 bis 6, wobei das Gemisch mindestens 90 % Kohlendioxid umfasst.

8. Verfahren nach einem der Ansprüche 4 bis 7, wobei ein Teil der Sumpfflüssigkeit der Säule als Produkt aus der Säule entnommen wird.

## Claims

1. Apparatus for separating a mixture containing, as main components, carbon dioxide and at least one other fluid selected from the group consisting of nitrogen, oxygen, argon, hydrogen, methane and carbon monoxide, by distillation, comprising a distillation column (8), a condenser (9), a reboiler (7, 11), a conduit (39) for sending the mixture to be separated to the condenser, means for sending a gas from the top of the column to the condenser, means for venting to air the gases that do not condense in the condenser (9) and means for sending a liquid condensed in the condenser to the top of the column, the condenser consisting of an exchanger with plates and fins made from brazed aluminium, and the condenser (9) is placed in a bath of refrigerating fluid that is ammonia, **characterised in that** the exchanger has an exchange surface area per m³ of exchanger greater than 400m²/m³, and **in that** the condenser (9) is disposed above the column (8) in use, and **in that** the head gas is sent to the condenser through the conduit (39).

2. Apparatus according to claim 1, wherein the condenser (9) is connected to means for supplying liquid or two-phase ammonia.

3. Apparatus according to one of the preceding claims, wherein the largest dimension of the exchanger constituting the condenser (9) is along a substantially vertical axis, in use.

4. Method for separating a mixture containing, as main components, carbon dioxide and at least one other fluid chosen from the group consisting of nitrogen, oxygen, argon, hydrogen, methane and carbon monoxide by distillation in an assembly comprising a distillation column (8), a condenser (9) and a reboiler (7, 11), wherein the mixture to be separated is sent to the condenser through a conduit (39), a column head gas heats the condenser, liquefies and is returned to the column, the gases that do not condense in the condenser (9) are vented to air, the condenser consisting of an exchanger with plates and fins made from brazed aluminium, in a bath of ammonia, and the condenser being cooled by sending a flow of ammonia to the condenser, **characterised in that** the exchanger has an exchange surface area per m³ of exchanger greater than 400m²/m³, the condenser (9) is disposed above the column (8), the head gas is sent to the condenser through the conduit and no part of the bottom liquid of the column (8) is sent to the condenser (9).

5. Method according to claim 4, wherein the liquid or two-phase ammonia is heated in the condenser.

6. Method according to one of claims 4 or 5, wherein the vessel of the column (8) is heated by means of the mixture to be separated before sending the mixture to be separated to the condenser (9).

7. Method according to one of claims 4 to 6, wherein the mixture comprises at least 90% carbon dioxide.

8. Method according to one of claims 4 to 7, wherein part of the bottom liquid of the column is drawn off from the column as a product.
